# EUROPÄISCHE PATENTSCHRIFT

(11) **EP 3 188 884 B1**
(45) Veröffentlichungstag und Bekanntmachung des Hinweises auf die Patenterteilung: **07.10.2020**
(21) Anmeldenummer: 15752906.6
(22) Anmeldetag: 05.08.2015
(51) Int. Cl.: B29C 44/12

(54) **VERFAHREN ZUR HERSTELLUNG EINES VERBUNDTEILS**
METHOD FOR PRODUCING A COMPOSITE PART
PROCÉDÉ DE FABRICATION D'UN ÉLÉMENT COMPOSITE

(30) Priorität: 04.09.2014 CH 13452014
(43) Veröffentlichungstag der Anmeldung: 12.07.2017
(73) Patentinhaber: Brugg Rohr Ag Holding, 5200 Brugg (CH)
(72) Erfinder: OESCHGER, Alfred, 5276 Wil (CH); KRESS, Jürgen, 8966 Oberwil-Lieli (CH); DAMBOWY, Christian, 5412 Gebenstorf (CH)
(74) Vertreter: Naiu, Radu Mircea
(86) Internationale Anmeldenummer: PCT/CH2015/000114
(87) Internationale Veröffentlichungsnummer: WO 2016/033700

(56) Entgegenhaltungen:
- WO-A1-2005/058573
- WO-A1-2013/057227
- US-A1- 2013 098 493

## Beschreibung

### Gebiet der Erfindung

Die Erfindung betrifft ein Verfahren zur Herstellung eines Verbundteils, welches mindestens einen inneren hohlen Formkörper mit Öffnungen aufweist, welche Öffnungen beim Verbundteil zugänglich sind. Ferner betrifft die Erfindung eine Verwendung eines nach dem Verfahren hergestellten Verbundteils.

### Hintergrund

Zur Verbindung von thermisch isolierten Rohren, wie sie z. B. verwendet werden um gekühlte Medien wie Wasser zu transportieren, werden Muffen verwendet. Diese Muffen bestehen aus einem inneren Teil, durch den das Medium fliesst, meist ein Hohlkörper aus Polyethylen (PE). Dieser Hohlkörper ist, ausser an seinen Öffnungen für das Medium, aussen komplett von einem thermisch isolierenden Material umgeben, meist Polyurethan (PU). Diese Muffen sind somit thermisch isoliert um zu vermeiden, dass die Umgebungsluft das gekühlte Medium erwärmt. Auf der Oberfläche der Muffe darf sich kein Kondenswasser bilden und die Oberfläche muss zudem mechanisch widerstandsfähig sein, um den Belastungen der Montage gewachsen zu sein, deshalb kommt häufig ein Mantel aus PE zum Einsatz, der sich auf der thermischen Isolation befindet. Die Muffen können verschiedene Formen aufweisen. So existieren gerade Verbinder, aber auch gebogene Formen oder T-Stücke werden benötigt. In vielen Fällen weisen diese Muffen noch zusätzliche Kanäle auf, die nach aussen führen und an der Oberseite offen bleiben müssen. Diese Kanäle dienen als Kontaktstellen für Kabel, die während der Montage angeschlossen werden und so eine Elektroverschweissung der Muffenenden mit den Rohrenden ermöglichen.

Die Herstellung solcher Verbundteile kann erfolgen, indem das Innenteil in den PE-Mantel eingeführt und nach mittiger Zentrierung mit einem geeigneten Material umschäumt wird. Problematisch ist dabei, dass gebogene oder verzweigte Innenstücke so nicht verarbeitet werden können, weil die Positionierung innerhalb des vorgefertigten PE-Mantels nicht erfolgen kann. Demnach ist dieses Verfahren nur für gerade Stücke universell einsetzbar, welche keine Kontaktstellen zur Elektroverschweissung aufweissen. Ein weiterer Nachteil ist die Notwendigkeit, den PE-Mantel zur Verfügung stellen zu müssen. Diese Teile müssen aufwendig spritzgegossen werden. Ausserdem ist die Wanddicke des PE-Mantels relativ gross, was einen hohen Materialaufwand bedeutet.

In der DE 10153855 A1 wird ein Verfahren beschrieben, in welchem ein Formteil nur teilweise an einer definierten Stelle mit einem Schaum hinterspritzt wird, nachdem die Oberfläche der Gussform an dieser Stelle mit einem Dekorlack versehen wurde, der später die Oberfläche des fertigen Bauteils bildet. Diese Funktion dieser Oberfläche ist in erster Linie dekorativ, spezielle mechanische Widerstandsfähigkeit wird nicht erwähnt. Der verwendete Schaum hat keine thermisch isolierende Funktion.

Anstelle eines Lackes, der in die Gussform gesprüht wird, kann auch eine Formhaut eingelegt werden, welche dann die Oberfläche des fertigen Verbundteils bildet. Dies ist z. B. in der DE 102007061643 A1 beschrieben. Nachteilig an diesem Verfahren ist die Notwendigkeit der Herstellung der Formhaut in einem gesonderten Arbeitsschritt. Ausserdem wird ein einkomponentiges PU-System verwendet, welches temperiert werden muss, um auszuhärten.

Die EP 1190828 A1 beschreibt ein ähnliches Verfahren aber mit dem Unterschied, dass die Gussform aus mehreren Teilen zusammengesetzt ist, was die Entformung von komplexeren Verbundteilen mit Hinterschnitten vereinfacht.

In der US 5223193 A wird ein Verfahren beansprucht, bei welchem auf die Oberfläche der Gussform ein reaktives Isocyanat/Polyol Gemisch aufgebracht wird. Im Anschluss rotiert die Form um eine gleichmässige Verteilung auf der Oberfläche zu bewirken und im Anschluss daran erfolgt die Ausschäumung mit einem zweiten PU-System. In diesem Verfahren wird kein innenliegendes Teil umschäumt.

In der US 5580501 A wird beschrieben, wie in eine Gussform eine erste Schicht aufgebracht wird in Form eines PU-basierenden Pulverlacks. Auch in diesem Verfahren wird eine Temperierung benötigt um den Pulverlack zu schmelzen und zur Reaktion zu bringen. Innnenliegende Teile, welche umschäumt werden, sind nicht vorgesehen.

In der US 2005244628 A ist beschrieben, wie ein weicher Gegenstand hergestellt werden kann, indem ebenfalls in eine Gussform zunächst eine Beschichtung aufgebracht wird und anschliessend eine zweite Beschichtung mit einem anderen Polymer. Ein Hartschaum findet hier keine Verwendung.

WO 2013/057227 A1 offenbart ein Verfahren zur Verbesserung der physikalischen Eigenschaften bei der Herstellung von Kunststoffmantelrohren.

WO 2005/058573 A1 offenbart ein Verfahren zur Herstellung von wärmegedämmten Rohren zur Beförderung von heissen oder kalten Flüssigkeiten.

US 2013/0098493 offenbart ein Verfahren zur Verbesserung der physikalischen Eigenschaften bei der Produktion von kunststoffummantelten Rohren.

### Darstellung der Erfindung

Es ist Aufgabe der Erfindung ein effizientes Herstellungsverfahren für Verbundteile zu schaffen, bestehend aus einem vorgefertigten Kunststoff Formteil, durch welches im fertigen Verbundteil ein temperiertes flüssiges Medium geführt wird, einer dieses Formteil umgebenden thermischen Isolationsschicht mit einer darauf befindlichen gegen mechanische Beanspruchung widerstandsfähigen Oberflächenschicht. Diese Oberflächenschicht soll eine geschlossene, einen qualitativ hochwertigen Eindruck ergebende Oberfläche des Verbundteils bilden.

Die gestellte Aufgabe wird durch die Merkmale des Anspruchs 1 gelöst.

Die Vorteile des beanspruchten Verfahrens sind mannigfaltig. In wenigen Verfahrensschritten wird ein komplexes Verbundteil aus Kunststoff gefertigt, welches mit alternativen Methoden nur schwer oder gar nicht hergestellt werden könnte. Durch die wenigen Verfahrensschritte ist ein hoher Durchsatz und damit eine gute Produktivität gewährleistet. Ausserdem entfällt der Produktionsschritt für den PE-Aussenmantel, der nicht mehr benötigt wird. Dies hat auch eine erhebliche Materialersparnis zur Folge weil die Mantelschicht jeweils nur in der Dicke aufgebracht wird, welche für die Endanwendung tatsächlich gebraucht wird. Die bevorzugte Dicke von 0.1 mm bis 3 mm ist deutlich geringer als die Dicke des normalerweise verwendeten PE-Aussenmantels, welche 3 mm - 6 mm beträgt. Die Eigenschaften der Oberfläche des Verbundteils können durch die Wahl des Materials der in dem Werkzeug aufgebrachten Mantelschicht bestimmt werden, ebenso die Verbindung zwischen der Mantelschicht und dem thermisch isolierenden Schaum. Durch den schrittweisen Prozessablauf können somit die Endeigenschaften des Verbundes gezielt auf den Einzelfall angepasst werden. So kann beispielsweise die Oberfläche bezüglich der Härte durch die Auswahl der Mantelschicht verändert werden. Demnach übernimmt jeder Teil des Verbundes eine ganz spezielle Funktion, das innenliegende Teil dient dem Transport des temperierten Mediums, der isolierende Schaum hat gute Eigenschaften bezüglich der Wärmedämmung und ist relativ hart um eine gute Gesamtstabilität zu liefern, die Aussenhaut zeigt ein elastisches Verhalten und ist unempfindlich gegen Kratzer oder andere mechanische Einflüsse

Wie erwähnt wird die Mantelschicht bevorzugt mit einer Dicke im Bereich von 0.1 mm bis 3 mm aufgebracht. Die Dicke kann je nach Verwendung des Verbundteils gewählt werden, damit dieses die Anforderungen bei der jeweiligen Verwendung erfüllt. Die Dicke kann insbesondere unter 3 mm liegend gewählt werden. Die Mantelschicht wird in den Werkzeugteilen durch Sprühen eines Kunststoffs aufgebracht, was eine rasche und gezielte Aufbringung in der gewünschten Dicke erlaubt. Bevorzugt wird die Mantelschicht auf Polyurethan-Basis gebildet. Dies ergibt die gewünschte Verbindung zwischen der Mantelschicht und der thermischen Isolation, die bevorzugt ein PU-Schaum ist. Die Mantelschicht kann bei der Aufbringung im Werkzeug einlagig oder mehrlagig aufgebracht werden.

Die Einbringung der mindestens einen Kunststoffschaumkomponente in das Formwerkzeug erfolgt bevorzugt vor dem Verschliessen des Formwerkzeugs, so dass z.B. zwei Komponenten zur Bildung des PU-Schaums in das offene untere Werkzeugteil eingegossen werden, nachdem das Formteil in dem Werkzeugteil positioniert worden ist. Danach wird das obere Werkzeugteil aufgesetzt und die Werkzeugteile werden fixiert. Es erfolgt die Schaumbildung und die Verbindung des Schaums mit der Mantelschicht und dem Formkörper. Alternativ wird das Werkzeug zuerst geschlossen und es erfolgt die Einbringung der schaumbildenden Substanzen über mindestens eine dazu im Werkzeug vorgesehene Öffnung.

Bevorzugt ist die mindestens eine Mantelschicht derart gebildet, bzw. das Kunststoffmaterial für die Mantelschicht wird so ausgewählt, dass die Mantelschicht als Oberfläche des Verbundteils eine Härte von mindestens 40 Shore-D aufweist. Es ist weiter möglich auf das entformte Verbundteil eine weitere Mantelschicht aufzubringen oder allenfalls mehrere Mantelschichten aufzubringen, wenn dies zur Erzielung besonderer Oberflächeneigenschaften des Verbundteils gewünscht ist. Der thermisch isolierende Kunststoffschaum weist bevorzugt eine Wärmeleitfähigkeit kleiner 0.040 W/m*K gemessen bei 50 °C gemäss der Norm EN12667 auf sowie insbesondere eine Druckfestigkeit von mindestens 100 kPa, bestimmt gemäss Norm ISO 844.

Bevorzugt ist der thermisch isolierende Kunststoffschaum von einer Isocyanat/Polyol Mischung gebildet, welche zur chemischen Reaktion bei Raumtemperatur ausgebildet ist. Bevorzugt erfolgt die Öffnung der Werkzeugteile und die Entformung des Verbundkörpers, wenn die Aushärtung genügend fortgeschritten ist, worunter insbesondere verstanden wird, dass der Umsatz der Komponenten der des thermisch isolierenden Kunststoffschaums im Formwerkzeug zu mindestens 80% bis 95% erfolgt ist. Bevorzugt ist es weiter, wenn die Kontaktflächen der Werkzeugteile schmal sind, so dass die Werkzeugteile sich nur über eine Breite von 0,5 Millimeter bis 1 Millimeter berühren. Dies ergibt eine Qualität der Mantelschicht im Bereich der Kontaktflächen, die eine Entgratung nach der Entformung überflüssig machen kann.

Der umschäumte Formkörper kann jede beliebige Form haben, auch gebogene Teile oder T-Stücke können erfolgreich verarbeitet werden. Auch ist es ohne weiteres möglich, Formkörper zu verwenden, welche an beliebiger Position Stege, Kanäle oder sonstige Anhängsel aufweisen.

Die bevorzugte Verwendung des nach dem Verfahren herstellten Verbundteils ist die Verwendung als Muffe zur Verbindung von thermisch isolierten Rohren, die ein Innenrohr, eine dieses umschliessende thermische Isolation und einen Aussenmantel aufweisen. Die Verwendung erfolgt auf an sich bekannte Weise, indem die im Verbindungsbereich freigelegten Innenrohre der Rohre in die Öffnungen des Verbundteils bzw. der Muffe eingeführt und dort auf geeignete Weise befestigt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt
Figur 1 eine Draufsicht auf den einen Werkzeugteil des Formwerkzeugs;
Figur 2 eine stirnseitige Ansicht auf das geschlossene Formwerkzeug; und
Figur 3 eine stirnseitige Ansicht eines Verbundteils.

### Weg(e) zur Ausführung der Erfindung

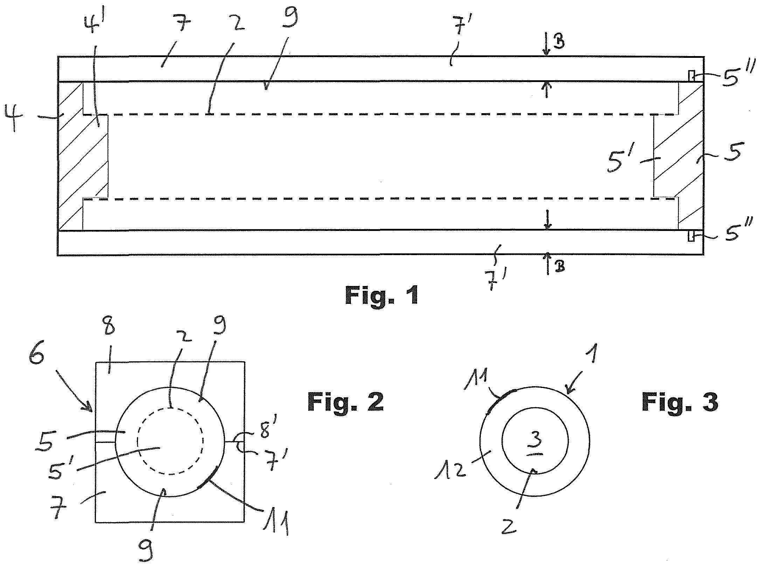

An Hand der Figuren 1 bis 3 wird eine Ausführung als Beispiel der Erfindung beschrieben. Dabei ist für die Vereinfachung der Zeichnung der Formkörper als zylindrischer Formkörper ohne Abzweigungen gewählt worden. Wie erwähnt, erlaubt das Verfahren gemäss der Erfindung aber die Herstellung von Verbundteilen mit komplexeren Formen des inneren Formteils.

Figur 1 zeigt eine Draufsicht auf den ersten Werkzeugteil 7 eines zweiteiligen Formwerkzeugs 6. Beide Werkzeugteile 7 und 8 sind in geschlossenem Zustand in Figur 2 ersichtlich. In Figur 1 zeigt die Draufsicht auf den Werkzeugteil 7 dessen Formwandung 9, die in diesem Beispiel die Form eines runden Halbzylinders aufweist. Mit dem oberen bzw. zweiten Werkzeugteil 8 ergibt sich eine zylindrische Form, so dass das entformte Verbundteil aussen zylinderförmig ist, wie in der stirnseitigen Ansicht des Verbundteils 1 von Figur 3 ersichtlich ist. In Figur 1 sind weiter Verschlussteile 4 und 5 des Formwerkzeugs geschnitten dargestellt. In diesem Beispiel dienen die Verschlussteile 4 und 5 zugleich zur Positionierung des Formkörpers 2, der in Figur 1 nur mit unterbrochenen Linien dargestellt ist. Ferner übernehmen die Verschlussteile 4 und 5 auch die Funktion des Schliessens der stirnseitigen Öffnungen 3 des Formkörpers 2 während des Verfahrens bzw. während des Umschäumens. Zu diesem Zweck weisen die Verschlussteile 4 und 5 Stopfen 4' bzw. 5' auf, welche so dimensioniert sind, dass sie durch die Öffnungen 3 des Formkörpers 2 in dessen Inneres ragen und an der Innenwand des Formkörpers anliegen, so dass sie die Öffnungen 3 schaumdicht verschliessen. Wenn der Formkörper 2 eine komplexere Form mit mehr Öffnungen aufweist, so können entsprechend separate Mittel bzw. Stopfen zum Schliessen dieser Öffnungen vorgesehen sein. Ebenfalls können weitere vom Verschluss des Formwerkzeugs separate Mittel für die Positionierung des Formkörpers 2 im Formwerkzeug vorgesehen sein. Auch kann das Formwerkzeug aus mehr als zwei Werkzeugteilen gebildet sein. Die Verschlussteile 4 und 5 können auf beliebige bekannte Weise an den Werkzeugteilen befestigt sein. In Figur 1 ist beim Verschlussteil 5 angedeutet, dass dieses mit einem Flansch 5", der in eine entsprechende Nut im Werkzeugteil eingreift, am Werkzeugteil befestigbar ist.

Auf die Formwandung 9 der Werkzeugteile wird vor der Positionierung des Formkörpers 2 und der Verschlüsse 4, 5 die Mantelschicht 11 aufgebracht, wobei dies insbesondere auf die ganze Formwandung erfolgt, so dass diese vollständig von der Mantelschicht 11 bedeckt ist. Die Mantelschicht ist zur besseren Darstellung in Figur 2 und Figur 3 teilweise mit einer dickeren Linie zeichnerisch hervorgehoben, wobei die Mantelschicht 11 in Figur 2 hinter dem Verschlussteil 5 im inneren des Formwerkzeugs liegt und eigentlich nicht sichtbar ist. Die Mantelschicht wird durch Aufsprühen auf die Innenwandung 9 jedes Werkzeugteils 7 und 8 aufgebracht. Weiter ist die Mantelschicht bevorzugt ein PU-basierender Kunststoff. Die Dicke der aufgebrachten Mantelschicht hängt ab von der Verwendung des fertigen Verbundteils und dem Eigenschaftsprofil des verwendeten Kunststoffs zur Bildung der Mantelschicht. Bevorzugt ist eine Dicke von 0.1 mm bis 3 mm. Die aufgebrachte Schicht sollte mit dem nachfolgend verwendeten Schaum chemisch möglichst kompatibel sein. Der Grund dafür ist, dass es dadurch zu einer guten Haftung zwischen den beiden Komponenten kommt. Da bevorzugt für den thermisch isolierenden Kunststoffschaum ein PU-basiertes Hartschaummaterial zur Anwendung kommt, ist auch für die Mantelschicht ein PU-System vorteilhaft. Für die Verwendung des fertigen Verbundteils ist die mechanische Belastbarkeit der Oberfläche ein entscheidendes Kriterium. Die Härte der Mantelschicht muss einen Mindestwert aufweisen, welcher bevorzugt bei 40 Shore-D liegt. Die Stabilität gegen andere Umwelteinflüsse wie Chemikalien oder UV-Strahlung kann ebenfalls angepasst werden.

Die Mantelschicht kann nach der Aufbringung auf die Formwandung 9 für eine vorbestimmte Zeit abgelüftet werden oder es kann eine Reaktionszeit für die Mantelschicht abgewartet werden. Vor der Aufbringung der Mantelschicht 11 auf die Formwandung 9 kann ggf. eine Trennschicht auf die Formwandung 9 aufgebracht werden, welche die spätere Entformung erleichtert.

Nach der Aufbringung der Mantelschicht auf die Formwandungen 9 der Werkzeugteile 7, 8 wird im Werkzeugteil 7 der Formköper 2 positioniert. Dies kann auf die erläuterte Weise mit den Verschlussteilen 4 und 5 erfolgen oder mit anderen Mitteln. Werden andere Mittel zur Positionierung verwendet, so erfolgt das Verschliessen der Öffnungen mit ebenfalls anderen Mitteln, insbesondere separaten Stopfen. Der Formkörper 2 wird vorzugsweise mittig im Formwerkzeug 6 positioniert, so dass die Dicke der isolierenden Schaumschicht beim fertigen Verbundteil gleichmässig ist. Anschliessend wird das den Schaum bildende Material in das Formwerkzeug eingebracht. Dies kann bei offenem Formwerkzeug durch Eingiessen in den unteren Formwerkzeugteil erfolgen, worauf der obere Formwerkzeugteil aufgesetzt wird und die Formwerkzeugteile fixiert werden, um während der Schaumbildung und Aushärtung ein geschlossenes Formwerkzeug zu bilden.

Bevorzugt ist das Formwerkzeug so ausgestaltet, dass die jeweilige Kontaktfläche 7' bzw. 8' der beiden Werkzeugteile 7 und 8 jeweils eine Breite B im Bereich von 0,5 Millimeter bis 1 Millimeter aufweist, wie dies in Figur 1 für die Kontaktflächen 7' angedeutet ist, so dass sich die beiden Werkzeugteile nur entlang einer entsprechend schmalen Kontaktfläche berühren. Es hat sich gezeigt, dass diese Ausgestaltung vorteilhaft für die Beschaffenheit der Oberfläche des Verbundkörpers im Bereich der sich berührenden Werkzeugteile ist bzw. dass dadurch praktisch kein Grat am Verbundkörper an der Stelle entsteht, an welcher die Werkzeugteile aneinander anliegen.

Das schäumende Material, welches den thermisch isolierenden Kunststoffschaum bildet, ist bevorzugt ein Zweikomponenten System, bestehend aus einer Isocyanatkomponente und einer Polyolkomponente, welches unmittelbar nach dem Einfüllen in das Formwerkzeug reagiert und einen Schaum bildet, der dann den innenliegenden Formkörper umschliesst, abgesehen von dessen Öffnungen, die frei gehalten werden. Damit der Schaum ausreichende isolierende Eigenschaften hat, ist er bevorzugt geschlossenzellig und besitzt eine thermische Leitfähigkeit kleiner 0.040 W/m*K, gemessen bei 50 °C und gemäss der EN12667.

Der Kunststoffschaum verbindet sich bei der Schäumung mit der Mantelschicht und insbesondere bevorzugt auch mit dem Formkörper. Wie zuvor erläutert werden dazu kompatible Substanzen für die Mantelschicht und den thermisch isolierenden Schaum eingesetzt und bevorzugt handelt es sich um eine PU-basierte Mantelschicht und um einen PU-Hartschaum. Nach genügender Aushärtung der Schaumschicht wird das Formwerkzeug geöffnet und das fertige Verbundteil entformt. Unter genügender Aushärtung wird insbesondere verstanden, dass der Umsatz der Komponenten des thermisch isolierenden Kunststoffschaums im Formwerkzeug zu mindestens 80% bis 95% erfolgt ist.

Es kann eine mechanische Nachbearbeitung erfolgen, z.B. eine Entgratung. Es ist ferner möglich auf die Mantelschicht eine weitere Schicht aufzubringen, um die Oberfläche des Verbundteils weiter zu verändern.

Der umschäumte Formkörper kann jede beliebige Form haben, auch gebogene Teile oder T-Stücke können erfolgreich verarbeitet werden. Auch ist es ohne weiteres möglich, Formkörper zu verwenden, welche an beliebiger Position Stege, Kanäle oder sonstige Anhängsel aufweisen.

Figur 3 zeigt eine stirnseitige Ansicht eines verfahrensgemäss hergestellten Verbundteils mit dem inneren Formteil 2 mit der Öffnung 3 bzw. in diesem Beispiel mit den in der Längsachse des zylindrischen Formkörpers 2 liegenden Öffnungen 3. Dieser Formkörper 2 ist vom thermisch isolierenden Kunststoffschaum 12 umgeben. Aussen am Schaumkörper liegt die Mantelschicht 11, welcher der Oberfläche des Verbundteils 1 die gewünschten Oberflächeneigenschaften verleiht. Bevorzugt ist das derart hergestellte Verbundteil 1 eine Muffe oder ein ähnliches Bauteil, welches zur Verbindung von wärmegedämmten Rohren vorgesehen ist. Solche Rohre weisen ein Innenrohr auf, welches das gekühlte oder erwärmte Medium führt, eine thermische Isolation um das Innenrohr, insbesondere eine PU-Hartschaumisolation, und einen Aussenmantel. Bei der Verwendung des Verbundteils 1 zur Verbindung solcher Rohre wird in deren Verbindungsbereich deren Innenrohr durch Entfernung des Aussenmantels und der thermischen Isolation und das freigelegte Innenrohr wird in die das Verbundteil 1 bzw. in die Muffe eingeführt und dort auf bekannte Weise fluiddicht befestigt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Herstellung eines Verbundteils (1), welches mindestens einen inneren hohlen Formkörper (2) mit Öffnungen (3) aufweist, dessen Öffnungen beim Verbundteil zugänglich sind, umfassend die Schritte
- Bereitstellung eines schliessbaren und öffenbaren Formwerkzeugs (6) mit mindestens einem ersten Werkzeugteil (7) und einem zweiten Werkzeugteil (8), welches Formwerkzeug im geschlossenen Zustand mit seiner inneren Formwandung (9) die Grösse und Kontur des fertigen Verbundteils (1) definiert;
- Aufbringen mindestens einer Mantelschicht (11) durch Sprühen eines die Mantelschicht bildenden Kunststoffs auf die innere Formwandung (9) der beiden Werkzeugteile (7, 8);
- Positionieren des Formkörpers (2) in dem Formwerkzeug (6) derart, dass der Formkörper bei geschlossenem Formwerkzeug im Formwerkzeug zu liegen kommt und dass die Öffnungen des Formkörpers geschlossen sind;
- Umschäumen des Formkörpers im geschlossenen Formwerkzeug mit einem thermisch isolierenden Kunststoffschaum (12), der ein- oder mehrkomponentig in das Formwerkzeug eingebracht wird und darin expandiert und sich mit der Mantelschicht und dem Formkörper verbindet; und
- Öffnen des Formwerkzeugs und Entformen des Verbundteils, das aus Formkörper (2), thermisch isolierendem Kunststoffschaum (12) und Mantelschicht (11) gebildet ist.

2. Verfahren nach Anspruch 1, **dadurch gekennzeichnet, dass** das Formwerkzeug geöffnet wird, wenn der Umsatz der Komponenten des isolierenden Kunststoffschaums im Formwerkzeug zu mindestens 80% bis 95% erfolgt ist.

3. Verfahren nach Anspruch 1 oder 2, **dadurch gekennzeichnet, dass** die Mantelschicht mit einer Dicke von 0.1 mm bis 3 mm aufgebracht wird.

4. Verfahren nach einem der vorangehenden Ansprüche, **dadurch gekennzeichnet, dass** die Mantelschicht auf Polyurethan-Basis gebildet wird.

5. Verfahren nach einem der vorangehenden Ansprüche, **dadurch gekennzeichnet, dass** die Mantelschicht einlagig oder mehrlagig aufgebracht wird.

6. Verfahren nach einem der Ansprüche 1 bis 5, **dadurch gekennzeichnet, dass** die Einbringung der mindestens einen Kunststoffschaumkomponente in das Formwerkzeug vor dem Verschliessen des Formwerkzeugs erfolgt.

7. Verfahren nach einem der Ansprüche 1 bis 5, **dadurch gekennzeichnet, dass** die Einbringung der mindestens einen Kunststoffschaumkomponente in das Formwerkzeug nach dem Verschliessen des Formwerkzeugs erfolgt.

8. Verfahren nach einem der vorangehenden Ansprüche, **dadurch gekennzeichnet, dass** die gemeinsamen Kontaktflächen (7' bzw. 8') der beiden Werkzeugteile (7 und 8) jeweils eine Breite im Bereich von 0,5 Millimeter bis 1 Millimeter aufweisen.

9. Verfahren nach einem der vorangehenden Ansprüche, **dadurch gekennzeichnet, dass** die mindestens eine Mantelschicht derart gebildet ist, dass sie als Oberfläche des Verbundteils eine Härte von mindestens 40 Shore-D aufweist.

10. Verfahren nach einem der vorangehenden Ansprüche, **dadurch gekennzeichnet, dass** auf das entformte Verbundteil (1) mindestens eine weitere Mantelschicht aufgebracht wird.

11. Verfahren nach einem der vorangehenden Ansprüche, **dadurch gekennzeichnet, dass** der thermisch isolierende Kunststoffschaum geschlossenzellig ist.

12. Verfahren nach einem der vorangehenden Ansprüche, **dadurch gekennzeichnet, dass** der thermisch isolierende Kunststoffschaum eine Wärmeleitfähigkeit kleiner 0.040 W/m*K gemessen bei 50 °C gemäss der Norm EN12667 aufweist.

13. Verfahren nach einem der Ansprüche 1 bis 12, **dadurch gekennzeichnet, dass** der thermisch isolierende Kunststoffschaum eine Druckfestigkeit auf von mindestens 100 kPa aufweist, bestimmt gemäss Norm ISO 844.

14. Verfahren nach einem der vorangehenden Ansprüche, **dadurch gekennzeichnet, dass** der thermisch isolierende Kunststoffschaum von einer Isocyanat/Polyol Mischung gebildet wird, welche bei Raumtemperatur chemisch reagiert.

15. Verfahren zur Verbindung von thermisch isolierten Rohren, die ein Innenrohr, eine das Innenrohr umschliessende thermische Isolation und einen Aussenmantel umfassen, mittels eines Verbundteils (1), welches mindestens einen inneren hohlen Formkörper (2) mit Öffnungen (3) aufweist, dessen Öffnungen beim Verbundteil zugänglich sind, umfassend die Schritte
- Bereitstellung eines schliessbaren und öffenbaren Formwerkzeugs (6) mit mindestens einem ersten Werkzeugteil (7) und einem zweiten Werkzeugteil (8), welches Formwerkzeug im geschlossenen Zustand mit seiner inneren Formwandung (9) die Grösse und Kontur des fertigen Verbundteils (1) definiert;
- Aufbringen mindestens einer Mantelschicht (11) aus Kunststoff auf die innere Formwandung (9) der beiden Werkzeugteile (7, 8);
- Positionieren des Formkörpers (2) in dem Formwerkzeug (6) derart, dass der Formkörper bei geschlossenem Formwerkzeug im Formwerkzeug zu liegen kommt und dass die Öffnungen des Formkörpers geschlossen sind;
- Umschäumen des Formkörpers im geschlossenen Formwerkzeug mit einem thermisch isolierenden Kunststoffschaum (12), der ein- oder mehrkomponentig in das Formwerkzeug eingebracht wird und darin expandiert und sich mit der Mantelschicht und dem Formkörper verbindet;
- Öffnen des Formwerkzeugs und Entformen des Verbundteils, das aus Formkörper (2), thermisch isolierendem Kunststoffschaum (12) und Mantelschicht (11) gebildet ist, und
- Verbinden von thermisch isolierten Rohren mittels mindestens eines Verbundteils als Muffe, wobei das Innenrohr der zu verbindenden thermisch isolierten Rohre zunächst freigelegt wird und anschliessend das freigelegte Innenrohr in die Muffe eingeführt wird.

## Claims

1. Method for producing a composite part (1) which has at least one inner hollow molded body (2) with openings (3), the openings of which are accessible in the composite part, comprising the steps
- providing a closable and openable forming tool (6) with at least a first tool part (7) and a second tool part (8), which forming tool in the closed state defines with its inner forming wall (9) the size and contour of the finished composite part (1);
- applying at least one coating layer (11) by spraying a plastic forming the coating layer onto the inner forming wall (9) of the two tool parts (7, 8);
- positioning the molded body (2) in the forming tool (6) in such a way that the molded body comes to rest in the forming tool when the forming tool is closed and that the openings of the molded body are closed;
- foaming the molded body in the closed forming tool with a thermally insulating plastic foam (12) which is introduced into the forming tool in one or more components and expands therein and bonds with the outer layer and the molded body; and
- opening the forming tool and demolding the composite part, which is formed from molded body (2), thermally insulating plastic foam (12) and outer layer (11) .

2. Method according to claim 1, **characterized in that** the forming tool is opened when the conversion of the components of the insulating plastic foam in the forming tool has been achieved to at least 80% to 95%.

3. Method according to claim 1 or 2, **characterized in that** the outer layer is applied with a thickness of 0.1 mm to 3 mm.

4. Method according to one of the preceding claims, **characterized in that** the outer layer is formed on a polyurethane basis.

5. Method according to one of the preceding claims, **characterized in that** the outer layer is applied in one or more layers.

6. Method according to one of claims 1 to 5, **characterized in that** the introduction of the at least one plastic foam component into the forming tool takes place before the forming tool is closed.

7. Method according to one of claims 1 to 5, **characterized in that** the introduction of the at least one plastic foam component into the forming tool takes place after the closing of the forming tool.

8. Method according to one of the preceding claims, **characterized in that** the common contact surfaces (7' and 8' respectively) of the two tool parts (7 and 8) each have a width in the range from 0.5 millimeters to 1 millimeter.

9. Method according to one of the preceding claims, **characterized in that** the at least one outer layer is formed such that it has a hardness of at least 40 Shore D as the surface of the composite part.

10. Method according to one of the preceding claims, **characterized in that** at least one further coating layer is applied to the demolded composite part (1) .

11. Method according to one of the preceding claims, **characterized in that** the thermally insulating plastic foam is closed-cell.

12. Method according to one of the preceding claims, **characterized in that** the thermally insulating plastic foam has a thermal conductivity of less than 0.040 W/m*K measured at 50°C according to the standard EN12667.

13. Method according to one of the claims 1 to 12, **characterized in that** the thermally insulating plastic foam has a compressive strength of at least 100 kPa, determined according to standard ISO 844.

14. Method according to one of the preceding claims, **characterized in that** the thermally insulating plastic foam is formed by an isocyanate/polyol mixture which reacts chemically at room temperature.

15. Method for connecting thermally insulated pipes comprising an inner pipe, a thermal insulation surrounding the inner pipe and an outer jacket by means of a composite part (1) comprising at least one inner hollow molded body (2) with openings (3), the openings of which are accessible at the composite part, comprising the steps
- providing a closable and openable forming tool (6) with at least a first tool part (7) and a second tool part (8), which forming tool in the closed state defines with its inner forming wall (9) the size and contour of the finished composite part (1);
- applying at least one outer layer (11) of plastic material to the inner forming wall (9) of the two tool parts (7, 8);
- positioning the molded body (2) in the forming tool (6) in such a way that the molded body comes to rest in the forming tool when the forming tool is closed and that the openings of the molded body are closed;
- foaming the molded body in the closed forming tool with a thermally insulating plastic foam (12) which is introduced into the mold in one or more components and expands therein and bonds with the outer layer and the molded body
- opening the forming tool and demolding the composite part, formed by the molded body (2), the thermally insulating plastic foam (12) and the outer layer (11), and
- connecting thermally insulating pipes by means of at least one composite part as sleeve, wherein the inner pipe of the thermally insulating pipes is first exposed and subsequently the exposed inner pipe is introduced into the sleeve.

## Revendications

1. Procédé de fabrication d'une pièce composite (1) qui présente au moins un corps moulé creux intérieur (2) avec des ouvertures (3), dont les ouvertures sont accessibles dans la pièce composite, comprenant les étapes
- mettre à disposition un outil de formage (6) pouvant être fermé et ouvert avec au moins une première partie d'outil (7) et une deuxième partie d'outil (8), lequel outil de formage à l'état fermé définit avec sa paroi de formage intérieure (9) la taille et le contour de la pièce composite finie (1) ;
- appliquer au moins une couche de revêtement (11) par pulvérisation d'un plastique formant la couche de revêtement sur la paroi de formage intérieure (9) des deux parties de l'outil (7, 8) ;
- positionner le corps moulé (2) dans l'outil de formage (6) de telle sorte que le corps moulé vienne se loger dans l'outil de formage lorsque ce dernier est fermé et que les ouvertures du corps moulé soient fermées;
- mousser le corps moulé dans l'outil de formage fermé avec une mousse plastique (12) thermiquement isolante qui est introduite dans l'outil de formage en un ou plusieurs éléments et qui s'y dilate et se lie avec la couche extérieure et le corps moulé ; et
- ouvrir l'outil de formage et démouler la pièce composite, qui est formée du corps moulé (2), d'une mousse plastique thermiquement isolante (12) et d'une couche extérieure (11).

2. Procédé selon la revendication 1, **caractérisé en ce que** l'outil de formage est ouvert lorsque la conversion des composants de la mousse plastique isolante dans l'outil de formage a été réalisée à au moins 80 % à 95 %.

3. Procédé selon la revendication 1 ou 2, **caractérisé en ce que** la couche extérieure est appliquée avec une épaisseur de 0,1 mm à 3 mm.

4. Procédé selon l'une des revendications précédentes, **caractérisé par le fait que** la couche extérieure est formée sur une base de polyuréthane.

5. Procédé selon l'une des revendications précédentes, **caractérisé en ce que** la couche extérieure est appliquée en une ou plusieurs couches.

6. Procédé selon l'une des revendications 1 à 5, **caractérisé en ce que** l'introduction d'au moins un composant de mousse plastique dans l'outil de formage a lieu avant la fermeture de l'outil de formage.

7. Procédé selon l'une des revendications 1 à 5, **caractérisé en ce que** l'introduction d'au moins un composant de mousse plastique dans l'outil de formage a lieu après la fermeture de l'outil de formage.

8. Procédé selon l'une des revendications précédentes, **caractérisé en ce que** les surfaces de contact communes (respectivement 7' et 8') des deux parties de l'outil (7 et 8) ont chacune une largeur comprise entre 0,5 millimètre et 1 millimètre.

9. Procédé selon l'une des revendications précédentes, **caractérisé en ce que** la au moins une couche extérieure est formée de telle sorte qu'elle présente une dureté d'au moins 40 Shore D en tant que surface de la pièce composite.

10. Procédé selon l'une des revendications précédentes, **caractérisé en ce qu'**au moins une autre couche extérieure est appliquée sur la pièce composite démoulée (1).

11. Procédé selon l'une des revendications précédentes, **caractérisé en ce que** la mousse plastique thermiquement isolante est à cellules fermées.

12. Procédé selon l'une des revendications précédentes, **caractérisé en ce que** la mousse plastique thermiquement isolante a une conductivité thermique inférieure à 0,040 W/m*K mesurée à 50°C selon la norme EN12667.

13. Procédé selon l'une des revendications 1 à 12, **caractérisé en ce que** la mousse plastique thermiquement isolante a une résistance à la compression d'au moins 100 kPa, déterminée selon la norme ISO 844.

14. Procédé selon l'une des revendications précédentes, **caractérisé en ce que** la mousse plastique thermiquement isolante est formée par un mélange isocyanate/polyol qui réagit chimiquement à température ambiante.

15. Procédé de raccordement de tuyaux isolés thermiquement comprenant un tuyau intérieur, une isolation thermique entourant le tuyau intérieur et une enveloppe extérieure au moyen d'une pièce composite (1) comprenant au moins un corps moulé creux intérieur (2) avec des ouvertures (3), dont les ouvertures sont accessibles au niveau de la pièce composite, comprenant les étapes
- mettre à disposition un outil de formage (6) pouvant être fermé et ouvert avec au moins une première partie d'outil (7) et une deuxième partie d'outil (8), lequel outil de formage à l'état fermé définit avec sa paroi de formage intérieure (9) la taille et le contour de la pièce composite finie (1) ;
- appliquer au moins une couche extérieure (11) de matière plastique sur la paroi intérieure de formage (9) des deux parties de l'outil (7, 8) ;
- positionner le corps moulé (2) dans l'outil de formage (6) de telle sorte que le corps moulé vienne s'appuyer dans l'outil de formage lorsque celui-ci est fermé et que les ouvertures du corps moulé soient fermées ;
- mousser le corps moulé dans l'outil de formage fermé avec une mousse plastique (12) thermiquement isolante qui est introduite dans l'outil de formage en un ou plusieurs éléments et qui s'y dilate et se lie à la couche extérieure et au corps moulé
- ouvrir l'outil de formage et démouler la pièce composite, formée par le corps moulé (2), la mousse plastique thermiquement isolante (12) et la couche extérieure (11), et
- raccorder des tuyaux isolés thermiquement au moyen d'au moins une pièce composite servant de manchon, le tuyau intérieur des tuyaux isolés thermiquement étant d'abord exposé, puis le tuyau intérieur exposé étant introduit dans le manchon.
